# EUROPÄISCHE PATENTANMELDUNG

(11) **EP 0 940 567 A2**
(43) Veröffentlichungstag der Anmeldung: **08.09.1999**
(21) Anmeldenummer: 99103075.0
(22) Anmeldetag: 17.02.1999
(51) Int. Cl.: F02B 29/04

(54) **Sauganlage zur Verbrennungsluftversorgung einer Brennkraftmaschine**

(30) Priorität: 05.03.1998 DE 19809412
(71) Anmelder: Volkswagen Aktiengesellschaft, 38436 Wolfsburg (DE)
(72) Erfinder: Biener, Martin, 38173 Veltheim (DE)

(57) **Zusammenfassung**

Die Erfindung betrifft Sauganlage zur Verbrennungsluftversorgung einer Brennkraftmaschine (14), insbesondere für ein Kraftfahrzeug, mit einem Luftverdichter (10) und einem wahlweise zwischen Luftverdichter (10) und Brennkraftmaschine (14) in einen Ansaugluftstrom schaltbaren Ladeluftkühler (12). Hierbei ist in den Ansaugluftstrom zwischen Luftverdichter (10) und Ladeluftkühler (12) einerseits und der Brennkraftmaschine (14) andererseits ein Mehrwegeventil (16) eingeschleift, welches derart ausgebildet ist, daß es wahlweise den Luftverdichter (10) direkt mit der Brennkraftmaschine (14) verbindet, den Luftverdichter (10) über den Ladeluftkühler (12) mit der Brennkraftmaschine (14) verbindet oder jeden Ansaugluftstrom zur Brennkraftmaschine (14) sperrt.

## Beschreibung

Die Erfindung betrifft eine Sauganlage zur Verbrennungsluftversorgung einer Brennkraftmaschine, insbesondere für ein Kraftfahrzeug, mit einem Luftverdichter und einem wahlweise zwischen Luftverdichter und Brennkraftmaschine in einen Ansaugluftstrom schaltbaren Ladeluftkühler, gemäß dem Oberbegriff des Anspruchs 1.

Aus der DE 42 40 239 A1 ist eine Verbrennungskraftmaschine mit Abgasrückführung und Ladeluftkühlung bekannt, welche einen Kühler für rückgeführte Abgase aufweist. Mittels eines im Ansaugluftstrom angeordneten Ventil kann die in einen Brennraum einzuleitende Luft jeweils zwischen Null und 100% entweder durch diesen Kühler in den Brennraum hineingeleitet oder unter Umgehung des Kühlers über eine Bypass-Leitung in den Brennraum hineingeleitet werden.

Aus dem US-Patent 4 932 378 ist ein Saugsystem für eine Brennkraftmaschine bekannt, welches in einem Saugrohr für einen Ansaugluftstrom ein sich drehendes Rotationssteuerventil aufweist, welches das Saugrohr während des Betriebes der Brennkraftmaschine zyklisch und synchron mit einer Drehung der Brennkraftmaschine öffnet und schließt.

Die JP 62-174528 offenbart eine Brennkraftmaschine mit einem Drehschieber, welcher wahlweise verschieden lange Ansaugwege für einen Ansaugluftstrom schaltet.

Die DE 43 08 354 A1 beschreibt ein Luftansaugsystem für einen aufgeladenen Motor mit einem Zwischenkühler, wobei ein Bypassregelventil vorgesehen ist, welches wahlweise den Ansaugluftstrom über den Zwischenkühler oder über eine Bypass-Leitung leitet.

Bei allen diesen Systemen ist es insbesondere bei einer Diesel-Brennkraftmaschine nachteilig, daß es beim Abschalten des Motors zu einem unkomfortablen Abstellschlagen kommt. Will man dies vermeiden, muß eine zusätzliche Drosselklappe im Ansaugluftweg vorgesehen sein, was aufwendig und teuer ist. Ferner benötigen die obengenannten Anordnung, sofern ein Ladeluftkühler vorgesehen ist, zu dessen Überbrückung in einer Warmlaufphase eine zusätzliche Bypass-Leitung, was das Ansaugsystem vergrößert, mit den entsprechenden Nachteilen bzgl. Gewicht und Bauraumbedarf.

Der vorliegenden Erfindung liegt daher die Aufgabe zugrunde, eine Sauganlage der obengenannten Art zur Verfügung zu stellen, wobei die obengenannten Nachteile überwunden werden und eine kompaktere Sauganlage mit weniger Bauteilen und geringerem Bauraumbedarf erzielt wird.

Diese Aufgabe wird erfindungsgemäß durch eine Sauganlage der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß in den Ansaugluftstrom zwischen Luftverdichter und Ladeluftkühler einerseits und der Brennkraftmaschine andererseits ein Mehrwegeventil eingeschleift ist, welches derart ausgebildet ist, daß es wahlweise den Luftverdichter direkt mit der Brennkraftmaschine verbindet, den Luftverdichter über den Ladeluftkühler mit der Brennkraftmaschine verbindet oder jeden Ansaugluftstrom zur Brennkraftmaschine spent.

Dies hat den Vorteil, daß in einem einzigen Bauteil die Funktion einer Drosselklappe und eines Bypass für den Ladeluftkühler vereint ist. Ferner entfällt dadurch, daß der Ladeluftkühler ebenso wie der Luftverdichter stromaufseitig am Mehrwegeventil angeordnet ist eine zusätzliche Bypass-Leitung für den Ladeluftkühler.

In einer besonders bevorzugten Ausführungsform weist das Mehrwegeventil einen ersten Anschlußstutzen für den Luftverdichter, einen zweiten Anschlußstutzen für einen Ansaugluftabstrom zu dem Ladeluftkühler, einen dritten Anschlußstutzen für einen Ansaugluftzustrom aus dem Ladeluftkühler und einen vierten Anschlußstutzen für einen Ansaugluftabstrom zur Brennkraftmaschine auf.

Hierbei ist in besonders bevorzugter Weise das Mehrwegeventil derart ausgebildet, daß es wahlweise entweder den ersten Anschlußstutzen mit dem vierten Anschlußstutzen derart verbindet, daß der Ansaugluftstrom vom Luftverdichter direkt zur Brennkraftmaschine strömt, oder den ersten Anschlußstutzen mit dem zweiten Anschlußstutzen sowie gleichzeitig den dritten Anschlußstutzen mit dem vierten Anschlußstutzen derart verbindet, daß der Ansaugluftstrom vom Luftverdichter über den Ladeluftkühler zur Brennkraftmaschine strömt, oder den vierten Anschlußstutzen vollständig derart verschließt, daß der Ansaugluftstrom zur Brennkraftmaschine unterbrochen ist.

Eine besonders kompakte und betriebssicher Ausführung erzielt man dadurch, daß das Mehrwegeventil ein Drehschieberventil ist. Hierbei ist zweckmäßigerweise das Mehrwegeventil ein Dreiwege- oder Vierwegeventil.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: ein Blockschaltbild einer erfindungsgemäßen Sauganlage,
- Fig. 2: eine bevorzugte Ausführungsform eines Dreiwegeventils für eine erfindungsgemäße Sauganlage in einer ersten Betriebsstellung in Schnittansicht,
- Fig. 3: in einer zweiten Betriebsstellung in Schnittansicht und
- Fig. 4: in einer dritten Betriebsstellung in Schnittansicht.

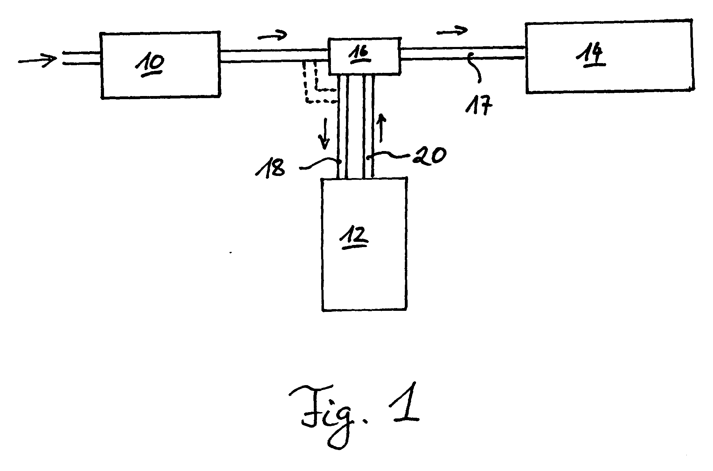

Die in Fig. 1 dargestellt bevorzugte Ausführungsform einer erfindungsgemäßen Sauganlage umfaßt einen Luftverdichter 10, einen Ladeluftkühler 12, und eine Brennkraftmaschine 14. Pfeile markieren einen Strömungsweg eines Ansaugluftstromes. Im Ansaugluftstrom ist ein Ventil 16 angeordnet. An diesem Ventil 16 ist einerseits bzw. stromauf bezüglich des Ansaugluftstromes sowohl der Luftverdichter 10 als auch der Ladeluftkühler 12 angeschlossen. Demgegenüber ist andererseits bzw. stromab bzgl. des Ansaugluftstromes die Brennkraftmaschine 14 über eine Leitung 17 angeschlossen. Mit anderen Worten ist sowohl eine Zustromleitung 18 als auch eine Abstromleitung 20 des Ladeluftkühlers 12 mit dem Ventil 16 verbunden. Alternativ kann auch die Zustromleitung 18 statt mit dem Ventil 16 direkt mit dem Luftverdichter 10 verbunden sein, wie dies in Fig. 1 mit gestrichelten Linien angedeutet ist. In diesem Falle genügt für das Ventil 16 eine Dreiwegeausführung.

Das Ventil 16 ist derart ausgebildet, daß es wahlweise den Luftverdichter direkt mit der Brennkraftmaschine verbindet, den Luftverdichter über den Ladeluftkühler mit der Brennkraftmaschine verbindet oder jeden Ansaugluftstrom zur Brennkraftmaschine dadurch sperrt, daß es Leitung 17 zur Brennkraftmaschine vollständig sperrt.

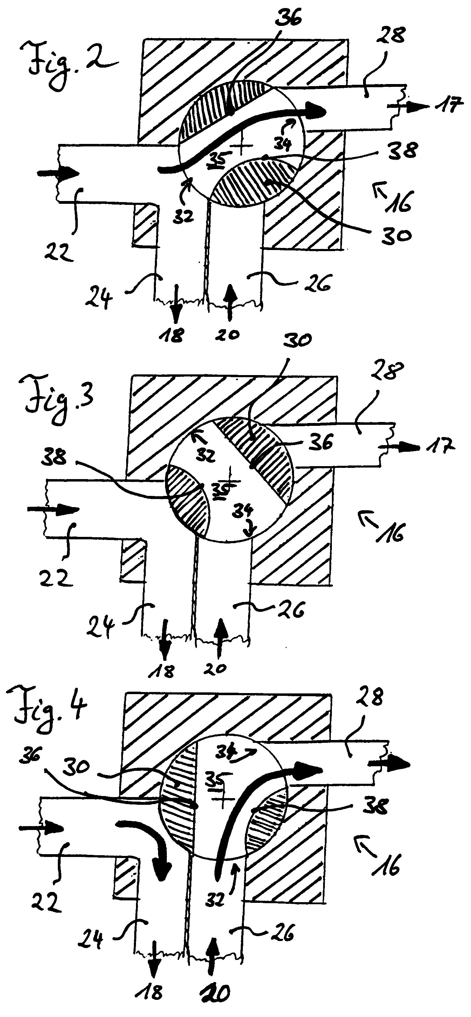

Die in den Fig. 2 bis 4 in verschiedenen Betriebszuständen dargestellte bevorzugte Ausführungsform eines Dreiwegeventil 16 für eine erfindungsgemäße Sauganlage umfaßt einen ersten Anschlußstutzen 22 zum Anschluß des Luftverdichters 10, einen zweiten Anschlußstutzen 24 für einen Ansaugluftabstrom über Zustromleitung 18 zu dem Ladeluftkühler 12, einen dritten Anschlußstutzen 26 für einen Ansaugluftzustrom aus dem Ladeluftkühler 12 über Abstromleitung 20 zurück zum Ventil 16 und einen vierten Anschlußstutzen 28 für einen Ansaugluftabstrom über Leitung 17 zur Brennkraftmaschine 14. Intern im Ventil 16 ist der erste Anschlußstutzen 22 direkt und permanent mit dem zweiten Anschlußstutzen 24 verbunden, so daß im Prinzip eine wie in Fig. 1 mit gestrichelten Linien angedeutete Konfiguration vorliegt. Trotz vier Anschlußstutzen 22, 24, 26 und 28 handelt es sich daher bei dem Ventil 16 um ein Dreiwegeventil.

Das Dreiwegeventil 16 umfaßt einen Drehschieber 30, welcher zwei Öffnungen 32 und 34 mit einem sich durch den Drehschieber erstreckenden und die Öffnungen 32 und 34 verbindenden Kanal 35 aufweist, die derart angeordnet sind, daß sie entsprechend einer Drehung des Drehschiebers 30 wahlweise entweder den ersten Anschlußstutzen 22 mit dem vierten Anschlußstutzen 28 derart verbinden, daß der Ansaugluftstrom vom Luftverdichter 10 direkt zur Brennkraftmaschine 14 strömt, oder den ersten Anschlußstutzen 22 mit dem zweiten Anschlußstutzen 24 sowie gleichzeitig den dritten Anschlußstutzen 26 mit dem vierten Anschlußstutzen 28 derart verbindet, daß der Ansaugluftstrom vom Luftverdichter 10 über den Ladeluftkühler 12 zur Brennkraftmaschine 14 strömt, oder den vierten Anschlußstutzen 28 vollständig derart verschließt, daß der Ansaugluftstrom zur Brennkraftmaschine 14 über Leitung 17 unterbrochen ist. Kanalwandungen 36 und 38 sind dabei derart ausgestaltet, daß sie eine Gasströmung durch den Kanal 35 unterstützen und gleichzeitig nicht benötigte Anschlußstutzen 22, 24 oder 26 oder 28 vollständig verschließen.

Fig. 2 zeigt eine Ventilstellung, in der der erste Anschlußstutzen 22 mit dem vierten Anschlußstutzen 28 derart verbunden ist, daß der Ansaugluftstrom vom Luftverdichter 10 direkt zur Brennkraftmaschine 14 strömt. Hierbei ist der Ladeluftkühler 12 in der Art eines Bypass überbrückt. Diese Stellung dient beispielsweise in einer Warmlaufphase der Brennkraftmaschine 14 dazu, daß diese schneller ihre Betriebstemperatur erreicht. Aber auch in anderen Betriebsphasen der Brennkraftmaschine 14, in denen die Betriebstemperatur unter einen vorbestimmten Wert sinkt, dient diese Stellung zum wieder erreichen der Betriebstemperatur.

Fig. 4 zeigt eine Ventilstellung, in der der erste Anschlußstutzen 22 mit dem zweiten Anschlußstutzen 24 sowie gleichzeitig der dritten Anschlußstutzen 26 mit dem vierten Anschlußstutzen 28 derart verbunden ist, daß der Ansaugluftstrom vom Luftverdichter 10 über den Ladeluftkühler 12 zur Brennkraftmaschine 14 strömt. In dieser Stellung ist der Ladeluftkühler 12 aktiv und kühlt die Ladeluft im Ansaugluftstrom vor dem Eintritt in die Brennkraftmaschine 14.

Fig. 3 zeigt eine Stellung, in der der Drehschieber 30 den vierten Anschlußstutzen 28 vollständig verschließt. Der Ansaugluftstrom zur Brennkraftmaschine 14 über Leitung 17 ist somit vollständig unterbrochen. Diese Stellung dient zum Abstellen der Brennkraftmaschine, insbesondere einer Diesel-Brennkraftmaschine, ohne Abstellschlagen.

## Patentansprüche

1. Sauganlage zur Verbrennungsluftversorgung einer Brennkraftmaschine (14), insbesondere für ein Kraftfahrzeug, mit einem Luftverdichter (10) und einem wahlweise zwischen Luftverdichter (10) und Brennkraftmaschine (14) in einen Ansaugluftstrom schaltbaren Ladeluftkühler (12),
dadurch gekennzeichnet, daß
in den Ansaugluftstrom zwischen Luftverdichter (10) und Ladeluftkühler (12) einerseits und der Brennkraftmaschine (14) andererseits ein Mehrwegeventil (16) eingeschleift ist, welches derart ausgebildet ist, daß es wahlweise den Luftverdichter (10) direkt mit der Brennkraftmaschine (14) verbindet, den Luftverdichter (10) über den Ladeluftkühler (12) mit der Brennkraftmaschine (14) verbindet oder jeden Ansaugluftstrom zur Brennkraftmaschine (14) sperrt.

2. Sauganlage nach Anspruch 1,
dadurch gekennzeichnet, daß
das Mehrwegeventil einen ersten Anschlußstutzen (22) für den Luftverdichter (10), einen zweiten Anschlußstutzen (24) für einen Ansaugluftabstrom zu dem Ladeluftkühler (12), einen dritten Anschlußstutzen (26) für einen Ansaugluftzustrom aus dem Ladeluftkühler (12) und einen vierten Anschlußstutzen (28) für einen Ansaugluftabstrom zur Brennkraftmaschine (14) aufweist.

3. Sauganlage nach Anspruch 2,
dadurch gekennzeichnet, daß
das Mehrwegeventil (16) derart ausgebildet ist, daß es wahlweise entweder den ersten Anschlußstutzen (22) mit dem vierten Anschlußstutzen (28) derart verbindet, daß der Ansaugluftstrom vom Luftverdichter (10) direkt zur Brennkraftmaschine (14) strömt, oder den ersten Anschlußstutzen (22) mit dem zweiten Anschlußstutzen (24) sowie gleichzeitig den dritten Anschlußstutzen (26) mit dem vierten Anschlußstutzen (28) derart verbindet, daß der Ansaugluftstrom vom Luftverdichter (10) über den Ladeluftkühler (12) zur Brennkraftmaschine (14) strömt, oder den vierten Anschlußstutzen (28) vollständig derart verschließt, daß der Ansaugluftstrom zur Brennkraftmaschine (14) unterbrochen ist.

4. Sauganlage nach einem der vorhergehenden Ansprüche,
dadurch gekennzeichnet, daß
das Mehrwegeventil (16) ein Drehschieberventil ist.

5. Sauganlage nach einem der vorhergehenden Ansprüche,
dadurch gekennzeichnet, daß
das Mehrwegeventil (16) ein Dreiwege- oder Vierwegeventil ist.
